# EUROPEAN PATENT APPLICATION

(11) **EP 3 537 360 A1**
(43) Date of publication of application: **11.09.2019**
(21) Application number: 18425011.6
(22) Date of filing: 06.03.2018
(51) Int. Cl.: G06Q 20/32, G06Q 20/40

(54) **METHOD TO AUTOMATICALLY ENABLE AND DISABLE AN ELECTRONIC PAYMENT INSTRUMENT THROUGH THE PROCESSING OF THE GEOGRAPHICAL POSITION OF THE ASSOCIATED USER**

(71) Applicant: Opentech Payment Services AG, 6300 Zug (CH)
(72) Inventor: Ferratelli, Valerio, 6300 Zug (CH); Andreani, Stefano, 6300 Zug (CH)
(74) Representative: Santi, Filippo

(57) **Abstract**

The present invention consists of a method aimed at reducing the number of payment instrument frauds, when it is possible to enable a control configuration based on the associated user's geographical position. The method acts through an automated mechanism designed to adapt to the user's mobility needs, automatically modifying the area enabled for payments. The setup of the configuration takes place automatically and without needing the user's input, by monitoring the user's location through a device associated with the user.

The method described has the ability to adapt to non-optimal conditions in terms of precision of the acquired geographical coordinates and / or temporary lack of network connection with remote systems, automatically converging towards a solution that maximizes the effectiveness of the method.

## Description

### FIELD OF THE INVENTION

The present invention relates to the automation of the configuration of electronic payment instruments in order to reduce the occurrence of frauds compared to a manual configuration.

### BACKGROUND OF THE INVENTION

Today there are many types of electronic payment instruments, the most known ones are credit and debit cards.
Payment instruments can be used to purchase goods and services at physical stores, to make online purchases, and to withdraw cash at ATM's. The increase of payment instruments and the expansion of the acceptance network make it necessary to introduce measures to limit possible fraud.
A possible countermeasure is the possibility for the legitimate user of a payment instrument to configure such an instrument by limiting some specific uses. Typical examples of block types are:
- Online purchases and the possibility of specifying a sub-set of categories (eg: gambling sites)
- Purchases at physical stores
- ATM withdrawals

A recent configuration possibility is the blocking of transactions based on the geographical location of the user and / or the merchant.
In this configuration, the user's geographical position is associated with the geographical location of a device associated with the user. This device is able to acquire and process its geographical position. The geographical position of a merchant (in case of a physical store) is acquired using the location of the payment terminal.

Localization technology is typically used in two forms:
I) In a form, available in solutions commonly used in the financial environment, such as MasterCard's InControl, the user, through a configuration service, pre-selects a set of geographical areas in which enables payments. In this way, geographical areas are implicitly specified where payments are disabled. Normally these geographical areas coincide with the geopolitical boundaries of all the Countries. When the transaction is made by using the pre-configured payment instrument, the geographic position of the merchant is compared to the enabled geographical areas; if a match is not found, the transaction is rejected.
The limit of this solution is constituted by the static nature of the set of areas enabled for payments. This set is typically configured so that it is reduced to the geographical areas in which the user typically operates, such as the country of residence. On the other hand, electronic payment instruments are typically used when a user travels for work or for leisure.
In this case the user must:
- before departure: remember to enable the geographical area of destination;
- return: remember to rehabilitate the geographical area of residence.

If the user forgets to change the configuration, the user will only be aware of the error during the first use of the payment instrument and, in the worst case, he may even not remember having set a block based on the geographical position. In these cases, after experiencing an uncomfortable situation, the user is forced to contact the payment instrument supplier to solve the issue.
II) Another form, described for example in EP2287792, consists in requesting at the moment of the transaction the user's position by an associated device. If the device is not within a reasonable range of the merchant's position, the transaction is rejected.
The limitation of this solution is the need to acquire the user's geographical position in a specific moment and to be able to communicate it to the payment instrument management service in a reasonable time. In the worst case, the user's location may not be available (such as inside buildings), or the device may not be able to transmit, such as when the user is abroad and does not have an active roaming data traffic.
Another limitation of this solution is that in order to work correctly, it requires to have both the user's and the merchant's location available at the same time.

In this context the solution according to the present invention is inserted, which proposes to implement an approach based on the automatic management of the areas authorized for payments, through which it is sufficient to obtain, at the moment of payment, the merchant's position and compare it with the area currently authorized for payments for that instrument.

### SUMMARY OF THE INVENTION

The object of the present invention is to reduce the number of frauds for payment instruments that allow a control configuration based on the geographical position.

The method works through an automated mechanism designed to automatically adapts to the user's mobility needs.

The mechanism works by automatically modifying the payment-enabled area for a payment instrument. The setup on the configuration of the areas takes place automatically and without needing the user's input, by monitoring the user's geographical position through a device associated with the user.

The described method has the ability to automatically converge on a solution, maximizing the reliability of the automatic setup by tuning the precision required during the acquisition of the geographical coordinates. The system prefers a low consumption and minimum precision mode, but it is able to temporarily scale to a high precision mode when this is necessary to achieve optimal effectiveness.

### BRIEF DESCRIPTION OF THE DRAWINGS

Some aspects of the features and advantages offered by the present invention will be clarified by taking advantage of the figures listed here, the detailed description and the claims.
**Figure 1**: shows a high-level diagram of the components involved in a possible embodiment of the method described in the present invention.

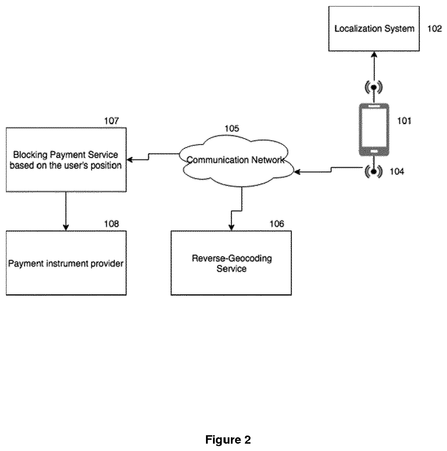

**Figure 2**: shows a simplified block diagram of a possible embodiment of the method described in the present invention.

### DETAILED DESCRIPTION

In the present description, the reference to the term "in an embodiment" means that a specifically described structure, feature or functionality may be included in at least one form.

The use of the term at various points in the description is not necessarily related to the same embodiment, nor that several possible embodiments are necessarily alternative or mutually exclusive compared to other embodiments.

It is therefore a specific object of the present invention a method to automatically enable or disable an electronic payment instrument by processing the geographical position of a user associated with the instrument, which comprises:
1. a preliminary and a one-time step in which a device that can detect geographical coordinate data is associated to a payment instrument and to a user who represents the legitimate user of the instrument;
and, subsequently, periodically, the following phases:
2. acquiring the position of the aforementioned user, by means of said device, associated to the user;
3. checking if the acquired position is included in an area previously authorized to make payments;
if the acquired position is not included within said area previously authorized to make payments,
4. the system automatically sending to a remote payment instrument management system a command to change the configuration of the payment instrument;
5. the command to change the configuration of the payment instrument, run by said remote system, enabling the area associated with the acquired position and at the same time disabling the previously authorized area.

In the above said method, the acquisition of the user's position is not limited to the continuous receiving of geographical coordinates, but also includes the use of means capable of providing geographical coordinates of the places visited by the user, ignoring the coordinates characterizing the relevant movements that lead him to such places.

The method comprises:
- the ability to use the information provided by the geographic coordinate acquisition module even when it is in the condition of having to provide the coordinates with an accuracy equal to or near its lower limit, in this case the system automatically acting by composing the available areas in super-sets characterized by an extension greater than or equal to said value;
- the ability to automatically scale from a geographical coordinates low-precision profile to a high-precision profile to maximize the effectiveness of the described solution;
- the ability to determine the user's logical position (reverse-geocoding) through the use of preloaded information available on the device, as well as by using remote services.

In the method described here the command to change the configuration of the payment instrument is communicated to a remote system that deals with the management of the payment instrument.

The method includes the ability to automatically converge on a solution even in the case of temporary lacking one of the necessary requirements for its completion, by activating a mode that can detect a change in the aforementioned requirements in order to complete the procedure as soon as possible and, in addition, a proactive notification to the user, which describes the recorded event.

In the method described here, the user's geographical position is obtained using any technology capable of acquiring geographical coordinates, such as for example:
- a GPS receiver associated to the device;
- A-GPS position detection technologies.

The command to change the configuration of the payment instrument and all the information necessary for the correct execution of the command are communicated in encrypted form and are decrypted by the payment instrument management system.

The command to change the configuration of the payment instrument, and all the necessary information for its execution, are cryptographically signed to guarantee the sender authentication and the non-repudiation of the command.

The present invention, in an embodiment thereof, is a method designed to be used with mobile devices, such as smartphones or tablets [101]. In this embodiment, the involved mobile device has the following characteristics:
- a mobile device capable of periodically acquiring the user's position without needing the user's input. In a different embodiment, the mobile device is able to acquire the position each time that a significant movement is identified. The geographic location can be acquired through GPS signal reception technologies or using Assisted GPS (A-GPS) technologies [102], or any equivalent technology capable of providing the geographical location.
- A mobile device capable of making network connections [104] to telecommunications networks [105] such as the Internet.
- A mobile device [101] capable of running a software used to associate the payment instrument with the device itself.
- A mobile device [101] capable of notifying the user with messages, avoiding the need for the user of a periodic manual check of the status of the payment instrument configuration.

The activation of the method described in the present description has as a prerequisite a step [201], to be carried out once, in which the payment instrument is associated with a device. The payment instrument, in an embodiment, is in turn associated with a single user. In this way, the association between a device and a user is also obtained. Thanks to this association, the terms "device position" and "user position" will be used herein below in an equivalent manner without the risk of incurring ambiguity.

Once the payment instrument is associated with the mobile device, the user's movements are monitored by starting the acquisition step of the user's geographical position.

The modern detection technologies of the user's position allow to choose between two acquisition modes:
- Low consumption [202]: in which the user's position is detected less frequently and turning on the detection systems for a shorter time. This guarantees a minimum energy impact, at the cost of a possible minor accuracy of the geographic coordinate. The reason that makes useful this mode is that in order to reduce fraud the user must be encouraged to leave the feature on the device active indefinitely, confident that this feature will have a marginal impact on the energy consumption of the device.
- High precision [205]: in which the user's position is detected with greater frequency and turning on the detection systems for a longer time. This implies a greater energy impact, but guarantees the maximum precision of the geographical coordinate, based on the used localization technology. The reason that makes this mode useful is that in order to reduce frauds the user must be guaranteed that the method will work even in critical conditions, such as when the user is near the border of the authorized area. In these cases, a rough geographical coordinate may not be sufficient to obtain an optimal effectiveness of the method described here.

Each time a position is acquired [203] the accuracy related to the acquisition is evaluated. If the accuracy is not considered sufficient, the system switches between "low consumption" [202] and "high precision" [205] modes.

Once the user's geographical coordinates have been obtained, they must be coded [206] through a procedure called reverse-geocoding to obtain some logical information, such as the address, the country and the nation relative to the coordinates itself.

In an embodiment, the encoding of the geographical coordinates takes place using remote services, in another embodiment the coding can take place on the device, using previously stored information and further limiting dependence on remote services.

The coordinates and/or logical information obtained in step [206] are compared with the set of positions included in the area currently authorized to make payments [207] and stored on the device. In a different embodiment, the comparison does not take place on the device, but the geographical coordinates are sent to a remote system that deals with the comparison.

If the system detects that the current position is not included in the area currently authorized to make payments then it starts the automatic configuration procedure of the payment instrument.

The system checks whether the necessary conditions exist for automatically configuring the payment instrument. In an embodiment, the control includes checking the ability to send commands to the remote payment instrument management system [208].

If the conditions are not verified, in a possible embodiment, the system acts, by warning the user of the event and waiting for these conditions to change. The notification sent to the user [209] is designed to prevent the payment instrument from being used in a condition in which it can not operate, causing inconvenience to the user.

The procedure is also designed to react automatically to a change in the conditions necessary to complete the process and act as soon as possible. In an embodiment the system waits to be notified by the operating system of the mobile device about a change in the conditions [210] and, as soon as it receives this notification, it performs the automatic configuration procedure again [208].

If the conditions [208] are verified, the system sends the configuration change command of the payment instrument to the remote system [211]. The configuration change command, in an embodiment, includes an identifier that specifies the new area to be activated, the identifier of the payment instrument subject to the request, and other quantities necessary to ensure the IT security of the command such as, but not limited to:
- a timestamp to identify the time when the request occurred
- a unique identifier of the device
- a cryptographic signature that authenticates all the data included in the command

The configuration change command is sent to the payment instrument management service [107], which in turn will communicate the change to the payment instrument provider [108] so that, at the time a transaction takes place, it can apply to the correct blocking policy based on the geographical position.

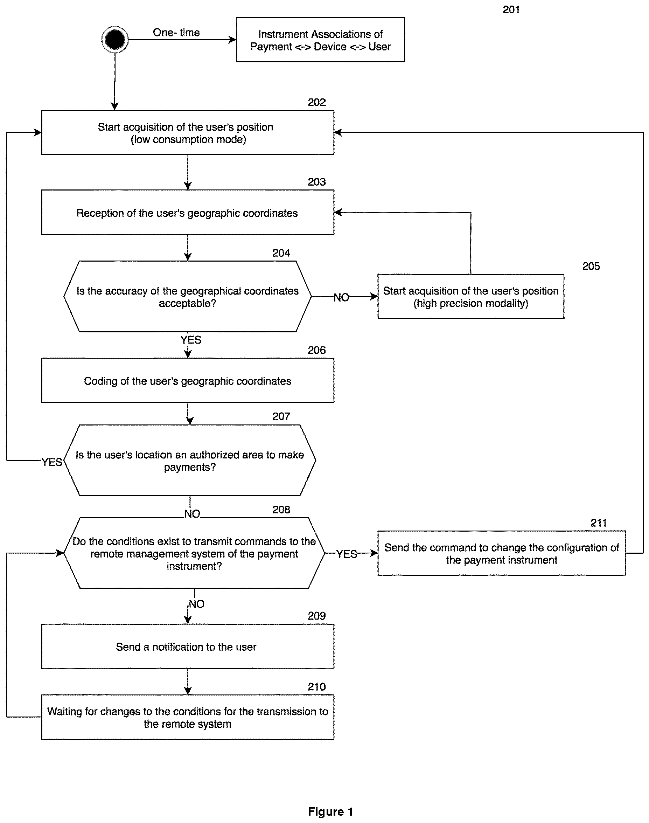

The present description should not be understood as the only one possible for the present invention. For example, the blocks [107] and [108] specified in Figure 1 can be merged into a single block that has the responsibilities of both components. Another example is the communications network block [105] which may consist of the Internet, an intranet network, a point-to-point network, or any other communication network capable of carrying information.

Some aspects of the present invention may be implemented by software or as hardware based processes, including embodiments on a single integrated circuit (such as an ASIC or an FPGA).

Some aspects of the present invention may be implemented in the form of a program code embodied in physical means, such as magnetic recording media, optical recording media, solid state memory, floppy disc, CD-ROMs, or any other computer-readable memory medium, wherein, when the program code is loaded and executed by a computer, such as a personal computer, a mobile device, or others, the computer becomes an apparatus to realize the invention. This is valid even if the aforesaid program is transferred and loaded using any transmission support, such as electric or coaxial cables, optical fibers, or electromagnetic radiation.

It will be understood that changes in the details, materials and arrangements of the parts that have been described and illustrated to explain the nature of the present invention can be made by the persons skilled in the field without departing from the scope of the invention as expressed in the following claims.

It will be understood that the steps of the illustrative methods presented here are not necessarily required to be performed in the order described, and the order of the steps of such methods should be understood as purely illustrative. In the same way, further steps can be included in such methods, and some steps may be omitted or combined, in consistent methods in various embodiments of the present invention.

## Claims

1. Method for automatically enabling or disabling an electronic payment instrument by processing the geographical position of the user associated with the instrument, which includes:
a. a preliminary and one-time step in which a device capable of detecting geographical coordinates is associated with a payment instrument and with a user who represents the legitimate user of the instrument;
and, subsequently, periodically, the following steps:
b. acquiring the position of the aforementioned user, by means of said device, associated to the user;
c. checking if the acquired position is included in an area previously authorized to make payments;
if the acquired position is not included within said area previously authorized to make payments;
d. the system automatically sending to a remote payment instruments management system a command to change the payment instrument configuration;
e. the command to change the payment instrument configuration, run by said remote system, enabling the area associated with the acquired position and simultaneously disabling the previously authorized area.

2. Method according to claim 1, which includes the ability to acquire the user's position not only through the continuous reception of the geographical coordinates, but also by using technologies capable of providing the geographical coordinates of the places visited by the user, ignoring the coordinates related to the movements that lead the user to such places.

3. Method according to claim 1, which includes the ability to use information provided by the device used to acquire geographic coordinates even when this is in the conditions of having to provide the coordinates with an accuracy near its lower limit, in this case the system automatically acting by composing the available areas in over-sets **characterized by** an extension greater than or equal to the aforesaid value.

4. Method according to claim 1, which includes the ability to automatically switch from a low-precision profile of the acquired geographic coordinates to a high-precision profile to maximize the effectiveness of the method described here.

5. Method according to claim 1, which includes the ability to obtain the user's logical position (reverse-geocoding) not only through the use of remote services but also by using information preloaded on the device and always available.

6. Method according to claim 1, in which the command to change the payment instrument configuration is communicated to a remote system that deals with the payment instrument management.

7. Method according to claim 1, which includes the ability to automatically converge to a solution even in the case of temporary lacking one of the necessary requirements for its completion is detected, by activating a procedure of automatic recovery which consists in observing the device status change notifications, sent by the device itself, reacting to those related to the aforesaid requirements, in order to complete the procedure as soon as possible.

8. Method according to claim 7, wherein in addition a proactive notification is delivered to the user, which describes the recorded event.

9. Method according to claim 1, in which the user's geographical position is obtained using a technology capable of acquiring geographical coordinates, such as GPS receivers or A-GPS position detection technologies or a combination of both.

10. Method according to claim 1, in which the command to change the payment instrument configuration and all the necessary information for the execution of this command are communicated in an encrypted form and are decrypted when received by the payment instrument management system.

11. Method according to claim 1, wherein the command to change the configuration of the payment instrument and all the necessary information for the correct execution of this command are cryptographically signed, guaranteeing the authentication of the sender and the non-repudiation of the command.

12. Computer program implementing the method described in the claims 1- 11.

13. Processor on which the computer program of claim 12 is running on.
